# EUROPEAN PATENT APPLICATION

(11) **EP 3 487 147 A1**
(43) Date of publication of application: **22.05.2019**
(21) Application number: 16908689.9
(22) Date of filing: 02.12.2016
(51) Int. Cl.: H04L 29/08, H04L 29/06

(54) **INFORMATION SYNCHRONIZATION METHOD AND DEVICE**

(30) Priority: 14.07.2016 CN 201610556730
(71) Applicant: ZTE Corporation, Shenzhen, Guangdong 518057 (CN)
(72) Inventor: YANG, Kun, Shenzhen Guangdong 518057 (CN)
(74) Representative: Brevalex
(86) International application number: PCT/CN2016/108411
(87) International publication number: WO 2018/010366

(57) **Abstract**

The present invention provides an information synchronization method and device. The method comprises: receiving a first request message sent from a terminal and used for requesting to create context information of the terminal, wherein the first request message comprises first context parameters for creating the context information of the terminal; creating the context information of the terminal according to the first context parameters; and sending a second request message to a gateway agent (GA) of a GA identifier according to the GA identifier obtained from the first context parameters and used for identifying the GA that needs to create the context information of the terminal, wherein the second request message is used for requesting the GA to create the context information of the terminal. The present invention can resolve the problem in the related art of a great amount of signaling overheads during the process of obtaining context information of a terminal by a GA, thereby achieving the effect of reducing signaling overheads.

## Description

### TECHNICAL FIELD

The disclosure relates to the field of communications, and more particularly to an information synchronization method and device.

### BACKGROUND

In an AllJoyn system, users can enjoy AllJoyn services using their AllJoyn devices in a near-end network (e.g., a home network). An AllJoyn Gateway Agent (GA) allows users to seamlessly experience the AllJoyn services when they leave the near-end network. To this end, the user sets up a remotely accessible service list in the near-end network, including a device, an Application (App) and an interface. After that, the user accesses the AllJoyn service remotely through a Cloud Service (CS).

A control App on a terminal (e.g., Mobile Device (MD)) enables the user to set a remote profile in the near-end network, and can also control the device and receive notifications after leaving the near-end network, as in the near-end network.

A third-party protocol with which the GA connects to its CS is specified by a service provider. Components that implement remote access in the GA include:
a gateway management App, which makes the control App manage a remote profile and exposes the remote profile to a connector App;
the connector App, which provides a connection between an AllJoyn device and a CS, and provides protocol conversion between AllJoyn and third-party protocols; and
the control App, which discovers the gateway management App in a notification-based manner, where the gateway management App and the connector App communicate with each other via the same AllJoyn router preset on the GA.

When a terminal remotely controls a device in the near-end network via the Internet, it needs to be implemented by the CS. At this time, the CS needs to obtain context information of the terminal to process a service request of the terminal; and when the terminal returns to the near-end network, a user no longer wants to connect to the Internet, but needs to directly and locally control the device in the near-end network through the GA. In this case, the GA needs to obtain the context information of the terminal to process the service request of the MD.

However, in the related art, when the terminal accesses the AllJoyn service remotely, only the CS obtains the context information of the terminal, and the GA does not have the context information of the terminal. Therefore, after the terminal returns to the near-end network, the GA needs to obtain the context information of the terminal from the CS or the terminal through an intermediate network element. In the process of obtaining, a great amount of signaling overheads will be generated, and the load of the network is increased.

### SUMMARY

The embodiments of the disclosure provide an information synchronization method and device, intended to at least solve the problem in the related art of a great amount of signaling overheads during the process of obtaining context information of a terminal by a GA.

According to an embodiment of the disclosure, an information synchronization method is provided. The method may include that: a first request message sent from a terminal and used for requesting to create context information of the terminal is received, herein the first request message includes a first context parameter for creating the context information of the terminal; the context information of the terminal is created according to the first context parameter; and a second request message is sent to a GA corresponding to a GA identifier obtained from the first context parameter and used for identifying the GA that needs to create the context information of the terminal, herein the second request message is used for requesting the GA to create the context information of the terminal.

In an embodiment, the operation that the context information of the terminal is created according to the first context parameter may include that: a sub-resource is created in an original resource of the terminal according to the first context parameter, and an attribute value of the sub-resource is set according to the first context parameter; and the operation that a second request message is sent to a GA corresponding to a GA identifier obtained from the first context parameter and used for identifying the GA that needs to create the context information of the terminal may include that: a request message for creating a notification resource corresponding to the sub-resource is sent to the GA corresponding to the GA identifier, where the request message for creating the notification resource corresponding to the sub-resource is used for requesting the GA to create the notification resource corresponding to the sub-resource, and an attribute value of the notification resource is set as the attribute value of the sub-resource according to the request message.

In an embodiment, the method may further include that: a third request message sent from the terminal and used for requesting to update the context information of the terminal is received, herein the third request message includes a second context parameter for updating the context information of the terminal; and the locally-stored context information of the terminal is updated according to the second context parameter, and a fourth request message is sent to the GA according to the second context parameter, herein the fourth request message is used for requesting to update the context information of the terminal, which is stored by the GA.

In an embodiment, the operation that the locally-stored context information of the terminal is updated according to the second context parameter and a fourth request message is sent to the GA according to the second context parameter may include that: the attribute value of the sub-resource in the original resource of the terminal is updated according to the second context parameter, and a fifth request message is sent to the GA according to the second context parameter, the fifth request message being used for requesting the GA to update the attribute value of the notification resource corresponding to the sub-resource.

According to another embodiment of the disclosure, an information synchronization method is provided. The method may include that: a second request message sent from a CS and used for requesting to create context information of a terminal is received, herein the second request message includes a third context parameter; and the context information of the terminal is created according to the third context parameter.

In an embodiment, the operation that the context information of the terminal is created according to the third context parameter may include that: a notification resource corresponding to a sub-resource in an original resource of the terminal is created according to the third context parameter, and an attribute value of the notification resource is set as the context information of the terminal according to the third context parameter, where the context information of the terminal is an attribute value of the sub-resource in the original resource of the terminal in the CS.

In an embodiment, the method may further include that: a fourth request message sent from the CS and used for requesting to update the context information of the terminal is received, herein the fourth request message includes a fourth context parameter; and the locally-stored context information of the terminal is updated according to the fourth context parameter.

Optionally, the operation that the locally-stored context information of the terminal is updated according to the fourth context parameter may include that: the attribute value of the notification resource corresponding to the sub-resource is updated according to the fourth context parameter.

Optionally, the method may further include that: access by the terminal is detected; and the service of the terminal is processed according to the locally-stored context information of the terminal.

Optionally, the operation that the service of the terminal is processed according to the locally-stored context information of the terminal may include that: the service of the terminal is processed according to the attribute value of the notification resource corresponding to the sub-resource.

According to yet another embodiment of the disclosure, an information synchronization device is provided. The device may include: a first receiving module, configured to receive a first request message sent from a terminal and used for requesting to create context information of the terminal, herein the first request message includes a first context parameter for creating the context information of the terminal; a first creation module, configured to create the context information of the terminal according to the first context parameter; and a sending module, configured to send a second request message to a GA corresponding to a GA identifier obtained from the first context parameter and used for identifying the GA that needs to create the context information of the terminal, herein the second request message is used for requesting the GA to create the context information of the terminal.

In an embodiment, the first creation module may be further configured to create a sub-resource in an original resource of the terminal according to the first context parameter, and set an attribute value of the sub-resource according to the first context parameter; and the sending module may be further configured to send a request message for creating a notification resource corresponding to the sub-resource to the GA corresponding to the GA identifier, where the request message for creating the notification resource corresponding to the sub-resource is used for requesting the GA to create the notification resource corresponding to the sub-resource, and an attribute value of the notification resource is set as the attribute value of the sub-resource according to the request message.

In an embodiment, the device may further include: a second receiving module, configured to receive a third request message sent from the terminal and used for requesting to update the context information of the terminal, herein the third request message includes a second context parameter for updating the context information of the terminal; and a first update module, configured to update the locally-stored context information of the terminal according to the second context parameter, and send a fourth request message to the GA according to the second context parameter, herein the fourth request message is used for requesting to update the context information of the terminal, which is stored by the GA.

In an embodiment, the first update module may be further configured to update the attribute value of the sub-resource in the original resource of the terminal according to the second context parameter, and send a fifth request message to the GA according to the second context parameter, the fifth request message being used for requesting the GA to update the attribute value of the notification resource corresponding to the sub-resource.

According to a further embodiment of the disclosure, an information synchronization device is provided. The device may include: a third receiving module, configured to receive a second request message sent from a CS and used for requesting to create context information of a terminal, herein the second request message includes a third context parameter; and a second creation module, configured to create the context information of the terminal according to the third context parameter.

In an embodiment, the second creation module may be further configured to create a notification resource corresponding to a sub-resource in an original resource of the terminal according to the third context parameter, and set an attribute value of the notification resource as the context information of the terminal according to the third context parameter, where the context information of the terminal is an attribute value of the sub-resource in the original resource of the terminal in the CS.

In an embodiment, the device may further include: a fourth receiving module, configured to receive a fourth request message sent from the CS and used for requesting to update the context information of the terminal, herein the fourth request message includes a fourth context parameter; and a second update module, configured to update the locally-stored context information of the terminal according to the fourth context parameter.

In an embodiment, the second update module may be further configured to update the attribute value of the notification resource corresponding to the sub-resource according to the fourth context parameter.

In an embodiment, the device may further include: a detection module, configured to detect access by the terminal; and a processing module, configured to process the service of the terminal according to the locally-stored context information of the terminal.

In an embodiment, the processing module may be further configured to process the service of the terminal according to the attribute value of the notification resource corresponding to the sub-resource.

According to a further embodiment of the disclosure, a storage medium is also provided. The storage medium may be configured to store a program code for performing the following operations: receiving a first request message sent from a terminal and used for requesting to create context information of the terminal, herein the first request message includes a first context parameter for creating the context information of the terminal; creating the context information of the terminal according to the first context parameter; and sending a second request message to a GA corresponding to a GA identifier obtained from the first context parameter and used for identifying the GA that needs to create the context information of the terminal, herein the second request message is used for requesting the GA to create the context information of the terminal.

In an embodiment, the storage medium may be further configured to store a program code for performing the following operations. The operation that the context information of the terminal is created according to the first context parameter may include that: a sub-resource is created in an original resource of the terminal according to the first context parameter, and an attribute value of the sub-resource is set according to the first context parameter. The operation that a second request message is sent to a GA corresponding to a GA identifier obtained from the first context parameter and used for identifying the GA that needs to create the context information of the terminal may include that: a request message for creating a notification resource corresponding to the sub-resource is sent to the GA corresponding to the GA identifier, where the request message for creating the notification resource corresponding to the sub-resource is used for requesting the GA to create the notification resource corresponding to the sub-resource, and an attribute value of the notification resource is set as the attribute value of the sub-resource according to the request message.

In an embodiment, the storage medium may be further configured to store a program code for performing the following operations. The method may further include that: a third request message sent from the terminal and used for requesting to update the context information of the terminal is received, herein the third request message includes a second context parameter for updating the context information of the terminal; and the locally-stored context information of the terminal is updated according to the second context parameter, and a fourth request message is sent to the GA according to the second context parameter, herein the fourth request message is used for requesting to update the context information of the terminal, which is stored by the GA.

In an embodiment, the storage medium may be further configured to store a program code for performing the following operations. The operation that the locally-stored context information of the terminal is updated according to the second context parameter and a fourth request message is sent to the GA according to the second context parameter may include that: the attribute value of the sub-resource in the original resource of the terminal is updated according to the second context parameter, and a fifth request message is sent to the GA according to the second context parameter, the fifth request message being used for requesting the GA to update the attribute value of the notification resource corresponding to the sub-resource.

According to another embodiment of the disclosure, an information synchronization method is provided. The method may include that: a second request message sent from a CS and used for requesting to create context information of a terminal is received, herein the second request message includes a third context parameter; and the context information of the terminal is created according to the third context parameter.

In an embodiment, the storage medium may be further configured to store a program code for performing the following operations. The operation that the context information of the terminal is created according to the third context parameter may include that: a notification resource corresponding to a sub-resource in an original resource of the terminal is created according to the third context parameter, and an attribute value of the notification resource is set as the context information of the terminal according to the third context parameter, where the context information of the terminal is an attribute value of the sub-resource in the original resource of the terminal in the CS.

In an embodiment, the storage medium may be further configured to store a program code for performing the following operations: receiving a fourth request message sent from the CS and used for requesting to update the context information of the terminal, herein the fourth request message includes a fourth context parameter; and updating the locally-stored context information of the terminal according to the fourth context parameter.

In an embodiment, the storage medium may be further configured to store a program code for performing the following operations. The operation that the locally-stored context information of the terminal is updated according to the fourth context parameter may include that: the attribute value of the notification resource corresponding to the sub-resource is updated according to the fourth context parameter.

In an embodiment, the storage medium may be further configured to store a program code for performing the following operations: detecting access by the terminal; and processing the service of the terminal according to the locally-stored context information of the terminal.

In an embodiment, the storage medium may be further configured to store a program code for performing the following operations. The operation that the service of the terminal is processed according to the locally-stored context information of the terminal may include that: the service of the terminal is processed according to the attribute value of the notification resource corresponding to the sub-resource.

By means of the embodiments of the disclosure, a first request message sent from a terminal and used for requesting to create context information of the terminal is received, herein the first request message includes a first context parameter for creating the context information of the terminal; the context information of the terminal is created according to the first context parameter; and a second request message is sent to a GA corresponding to a GA identifier obtained from the first context parameter and used for identifying the GA that needs to create the context information of the terminal, herein the second request message is used for requesting the GA to create the context information of the terminal. After context information of a terminal is created, the context information of the terminal is synchronized to a GA, so that the GA is not required to obtain the context information of the terminal from a CS or the terminal through an intermediate network element. Therefore, the problem in the related art of a great amount of signaling overheads during the process of obtaining context information of a terminal by a GA can be solved, thereby achieving the effect of reducing signaling overheads.

### BRIEF DESCRIPTION OF DRAWINGS

The accompanying drawings described herein are used to provide a further understanding of the disclosure, and constitute a part of the present application, and the exemplary embodiments of the disclosure and the description thereof are used to explain the disclosure, but do not constitute improper limitations to the disclosure. In the drawings:
FIG. 1 is a block diagram showing a hardware structure of a network element of an information synchronization method according to an embodiment of the disclosure.
FIG. 2 is a flowchart 1 of an information synchronization method according to an embodiment of the disclosure.
FIG. 3 is a flowchart 2 of an information synchronization method according to an embodiment of the disclosure.
FIG. 4 is a schematic diagram of a local/remote access of an AllJoyn service according to an embodiment of the disclosure.
FIG. 5 is a preferred flowchart of an information synchronization method according to an embodiment of the disclosure.
FIG. 6 is a structural block diagram 1 of an information synchronization device according to an embodiment of the disclosure.
FIG. 7 is a preferred structural block diagram 1 of an information synchronization device according to an embodiment of the disclosure.
FIG. 8 is a structural block diagram 2 of an information synchronization device according to an embodiment of the disclosure.
FIG. 9 is a preferred structural block diagram 2 of an information synchronization device according to an embodiment of the disclosure.
FIG. 10 is a preferred structural block diagram 3 of an information synchronization device according to an embodiment of the disclosure.

### DETAILED DESCRIPTION

The disclosure will be described in detail below with reference to the drawings in conjunction with the embodiments. It is to be noted that embodiments in the present application and characteristics in the embodiments may be combined under the condition of no conflicts.

It is to be noted that the specification and claims of the disclosure and the terms "first", "second" and the like in the drawings are used to distinguish similar objects, and do not need to describe a specific sequence or a precedence order.

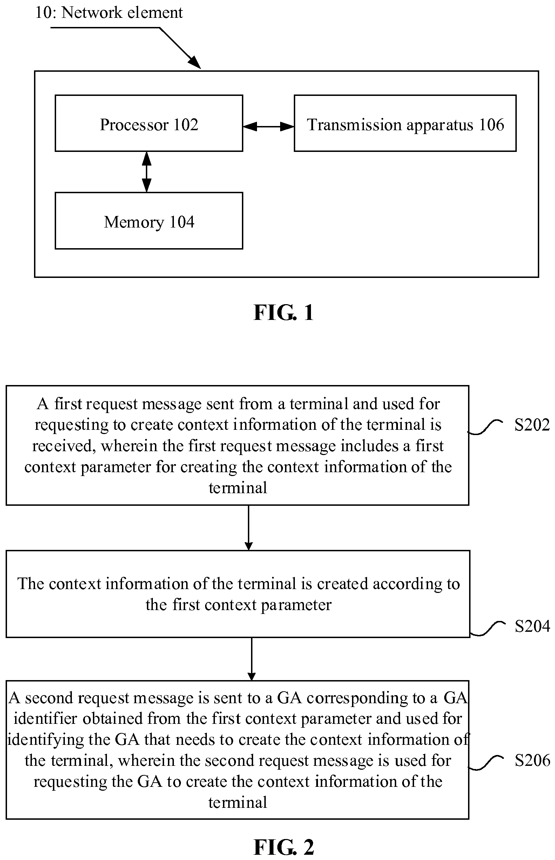

First Embodiment The method embodiment provided in a first embodiment of the disclosure may be executed in a network element, a computer terminal or a similar computing device. Running on a network element is taken as an example. FIG. 1 is a block diagram showing a hardware structure of a network element of an information synchronization method according to an embodiment of the disclosure. As shown in FIG. 1, a network element 10 may include one or more (only one shown in the figure) processors 102 (the processor 102 may include, but is not limited to, a processing device such as a Micro Control Unit (MCU) or a Field Programmable Gate Array (FPGA), a memory 104 configured to store data, and a transmission device 106 for a communication function. It will be understood by those skilled in the art that the structure shown in Fig. 1 is merely illustrative and does not limit the structure of the above electronic device. For example, the network element 10 may also include more or fewer components than shown in FIG. 1, or have a different configuration than that shown in FIG. 1.

The memory 104 may be configured to store a software program and module of application software, such as a program instruction/module corresponding to an information synchronization method in the embodiments of the disclosure. The processor 102 executes various functional applications and data processing, that is, implements the above method by running the software program and module stored in the memory 104. The memory 104 may include a high speed random access memory and may also include a non-volatile memory such as one or more magnetic storage devices, a flash memory, or other non-volatile solid state memories. In some examples, the memory 104 may further include memories remotely located relative to the processor 102, which may be connected to the network element 10 over a network. The examples of such networks include, but are not limited to, the Internet, the Intranet, local area networks, mobile communication networks, and combinations thereof.

The transmission device 106 is configured to receive or send data over a network. The above specific network examples may include a wireless network provided by a communication provider of the network element 10. In one example, the transmission device 106 includes a Network Interface Controller (NIC) that can be connected to other network devices through the base station to communicate with the Internet. In one example, the transmission device 106 may be a Radio Frequency (RF) module for communicating with the Internet wirelessly.

An information synchronization method running on a network element is provided in the present embodiment. FIG. 2 is a flowchart 1 of an information synchronization method according to an embodiment of the disclosure. As shown in FIG. 2, the flow includes the operations as follows.

At S202, a first request message sent from a terminal and used for requesting to create context information of the terminal is received, herein the first request message includes a first context parameter for creating the context information of the terminal.

At S204, the context information of the terminal is created according to the first context parameter.

At S206, a second request message is sent to a GA corresponding to a GA identifier obtained from the first context parameter and used for identifying the GA that needs to create the context information of the terminal, herein the second request message is used for requesting the GA to create the context information of the terminal.

By means of the above operations, after context information of a terminal is created, the context information of the terminal is synchronized to a GA, so that the GA is not required to obtain the context information of the terminal from a CS or the terminal through an intermediate network element. Therefore, the problem in the related art of a great amount of signaling overheads during the process of obtaining context information of a terminal by a GA can be solved, thereby achieving the effect of reducing signaling overheads.

Optionally, the operation that the context information of the terminal is created according to the first context parameter includes that: a sub-resource is created in an original resource of the terminal according to the first context parameter, and an attribute value of the sub-resource is set according to the first context parameter. For example, it may be implemented by the following manners: creating a sub-resource <Contex> of an original resource of the terminal according to the first context parameter, and setting an attribute value of the sub-resource <Contex> according to the first context parameter, which includes the context information of the terminal.

Optionally, the operation that a second request message is sent to a GA corresponding to a GA identifier obtained from the first context parameter and used for identifying the GA that needs to create the context information of the terminal includes that: a request message for creating a notification resource corresponding to the sub-resource is sent to the GA corresponding to the GA identifier, where the request message for creating the notification resource corresponding to the sub-resource is used for requesting the GA to create the notification resource corresponding to the sub-resource, and an attribute value of the notification resource is set as the attribute value of the sub-resource according to the request message. For example, it may be implemented by the following manners: sending a request for creating a notification resource to the GA, so that the GA may create a notification resource corresponding to the sub-resource <Contex> according to the request message; and setting an attribute value of the notification resource <Contex> according to the request message, which includes the context information of the terminal.

Optionally, a third request message sent from the terminal and used for requesting to update the context information of the terminal is received, herein the third request message includes a second context parameter for updating the context information of the terminal; and the locally-stored context information of the terminal is updated according to the second context parameter, and a fourth request message is sent to the GA according to the second context parameter, herein the fourth request message is used for requesting to update the context information of the terminal, which is stored by the GA. By means of the above operations, the context information of the terminal is updated in real time, and it is ensured that the latest service request of the terminal is processed according to the synchronized context information of the terminal.

Optionally, the operation that the locally-stored context information of the terminal is updated according to the second context parameter and a fourth request message is sent to the GA according to the second context parameter includes that: the attribute value of the sub-resource in the original resource of the terminal is updated according to the second context parameter, and a fifth request message is sent to the GA according to the second context parameter, the fifth request message being used for requesting the GA to update the attribute value of the notification resource corresponding to the sub-resource. For example, when the context information of the terminal is changed, a third request message which is sent by a control application in the terminal and used for updating the context information of the terminal is received, the request message including a second context parameter; an attribute value of the sub-resource <Context> of the original resource is updated according to the second context parameter, and a fourth request message for requesting to update the context information of the terminal stored by the GA is sent according to the GA identifier (for example, it may be set that a notification parameter and the second context parameter are sent together from the terminal), and the GA is requested to update the attribute value of the notification resource <Context> corresponding to the sub-resource to the updated context information of the terminal.

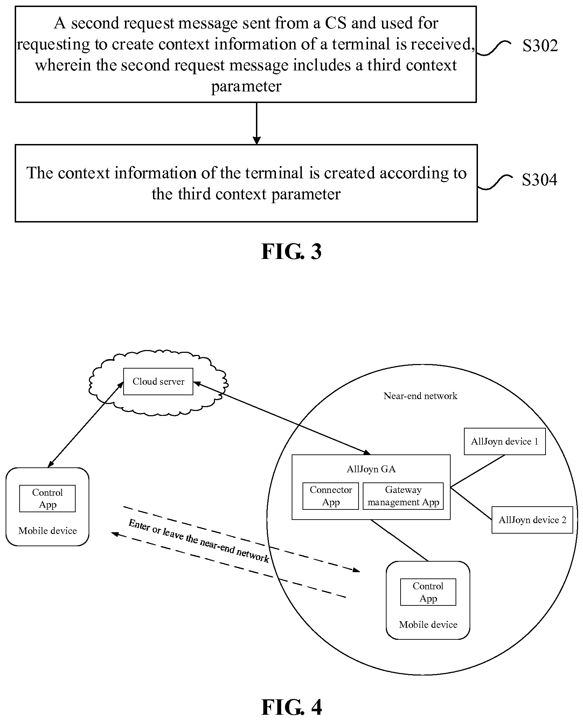

An information synchronization method running on a network element is provided in the present embodiment. FIG. 3 is a flowchart 2 of an information synchronization method according to an embodiment of the disclosure. As shown in FIG. 3, the flow includes the operations as follows.

At S302, a second request message sent from a CS and used for requesting to create context information of a terminal is received, herein the second request message includes a third context parameter.

At S304, the context information of the terminal is created according to the third context parameter.

By means of the above operations, the context information of the terminal is synchronized to a GA, so that the GA is not required to obtain the context information of the terminal from a CS or the terminal through an intermediate network element. Therefore, the problem in the related art of a great amount of signaling overheads during the process of obtaining context information of a terminal by a GA can be solved, thereby achieving the effect of reducing signaling overheads.

Optionally, the operation that the context information of the terminal is created according to the third context parameter includes that: a notification resource corresponding to a sub-resource in an original resource of the terminal is created according to the third context parameter, and an attribute value of the notification resource is set as the context information of the terminal according to the third context parameter, where the context information of the terminal is an attribute value of the sub-resource in the original resource of the terminal in the CS. For example, it may be implemented by the following manners: the GA may create a notification resource corresponding to a sub-resource <Contex> according to a third context parameter included in the request message, and an attribute value of the notification resource <Contex> is set according to the third context parameter, which includes the context information of the terminal.

Optionally, a fourth request message sent from the CS and used for requesting to update the context information of the terminal is received, herein the fourth request message includes a fourth context parameter; and the locally-stored context information of the terminal is updated according to the fourth context parameter. By means of the above operations, the context information of the terminal is updated in real time, and it is ensured that the latest service request of the terminal is processed according to the synchronized context information of the terminal.

Optionally, the operation that the locally-stored context information of the terminal is updated according to the fourth context parameter includes that: the attribute value of the notification resource corresponding to the sub-resource is updated according to the fourth context parameter. For example, the GA updates the attribute value of the notification resource <Context> corresponding to the sub-resource according to the fourth context parameter to the updated context information of the terminal.

Optionally, access by the terminal is detected; and the service of the terminal is processed according to the locally-stored context information of the terminal. By means of the above operations, after the terminal enters a near-end network, the GA does not need to synchronize the context information from the CS or the terminal through an intermediate network element, and directly obtains the information from the GA locally, thereby saving the signaling overheads and improving the user experience.

Optionally, the operation that the service of the terminal is processed according to the locally-stored context information of the terminal includes that: the service of the terminal is processed according to the attribute value of the notification resource corresponding to the sub-resource. For example, when the terminal needs to obtain the context information of the terminal after the terminal enters the near-end network, the attribute value of the notification resource <Context> is locally retrieved to obtain the context information of the terminal.

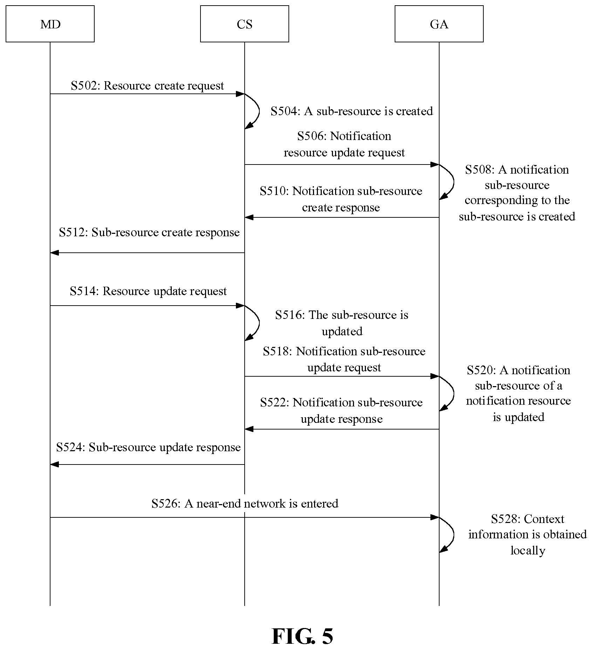

For the purpose of facilitating the understanding of the embodiments of the disclosure, the creation of context information of a terminal through the creation of a sub-resource related to the context information of the terminal is taken as an example for description. An MD requests to create a sub-resource related to the context information thereof in a resource created by a CS (i.e., terminal) therefor, and notifies a GA of the sub-resource; the GA creates a notification resource corresponding to the sub-resource related to the context information of the MD; when the context information of the MD is changed, the MD updates the notification resource corresponding to the sub-resource in the GA through the CS; and after the MD enters a near-end network, the GA obtains the context information of the MD from the notification resource corresponding to the sub-resource, and synchronization from the CS or the MD is not needed. FIG. 4 is a schematic diagram of a local/remote access of an AllJoyn service according to an embodiment of the disclosure. FIG. 5 is a preferred flowchart of an information synchronization method according to an embodiment of the disclosure. With reference to FIG. 4, the method flow is as shown in FIG. 5, including the operations as follows.

At S502, a control App in an MD sends a resource create request message (the same as the above-mentioned first request message for creating the context information of the terminal) to a CS, herein the request message includes a first context parameter and a notification parameter, specifically:
1) Resource type: a sub-resource in the type of <Context> is created.
2) Original resource address: when the MD is registered on the CS, the CS is a Uniform Resource Identifier (URI) of a resource "Rsc-CA" in the type of "application entity" created by the control App in the MD.
3) Content, including: a "Notify to" attribute, the value being set to an identity of a GA specified in context information of the MD; and an attribute of a sub-resource <Context> that needs to be created.

At S504, after receiving the request message of the control App in the MD, the CS retrieves the resource "Rsc-CA" according to an original resource address, and creates the sub-resource <Context> for the resource "Rsc-CA", the attribute value including the context information of the MD, specifically:
1) User context information, including information such as a network environment in which a user is located and a physical status of the user.
2) Terminal context information, including information such as communication, calculation, and service presentation of the terminal itself.
3) Network context information, including network descriptions, general resources of the network, and context information for streams.

At S506, the CS judges whether the "Notify to" attribute of the resource "Rsc-CA" has an identity of the GA in the notification parameter, if so, a notification resource update request is sent to the GA, and the GA is requested to create a notification sub-resource <Context> corresponding to the sub-resource <Context> in a notification resource "Rsc-CA_Annc" corresponding to the original resource "Rsc-CA" in the GA, the request message (the same as the above-mentioned second request message for requesting the GA to create the context information of the terminal) including a third context parameter, specifically:
1) Address: URI of the notification resource "Rsc-CA_Annc".
2) Content: attribute of the sub-resource <Context> needing to be notified.

At S508, after receiving the request message of the CS, the GA retrieves the notification resource "Rsc-CA_Annc" according to the address, and creates the notification sub-resource <Context> for the notification resource "Rsc-CA_Annc", the attribute value being the same as the sub-resource <Context> of the original resource "Rsc-CA".

At S510, the GA sends a notification resource update response to the CS, the response message including the URI of the notification sub-resource <Context> of the notification resource "Rsc-CA_Annc".

At S512, after receiving the response message of the GA, the CS updates an attribute "Notified attribute" of the resource "Rsc-CA", and sends a resource create response to the control App, the response message including the URI of the sub-resource <Context> of the original resource "Rsc-CA".

At S514, when the context information of the MD is changed, the control App in the MD sends a resource update request (the same as the above-mentioned third request message for requesting to update the context information of the terminal) to the CS, the request message including a second context parameter and a notification parameter, specifically:
1) Address: URI of the sub-resource <Context> of the original resource "Rsc-CA".
2) Content, including: a "Notify to" attribute, the value being set to an identity of the GA; and an attribute of the sub-resource <Context> that needs to be updated.

At S516, after receiving the request message of the control App, the CS updates the attribute value of the sub-resource <Context> of the original resource "Rsc-CA" according to the second context parameter to the updated context information of the terminal.

At S518, the CS sends a notification resource update request to the GA according to the notification parameter, for requesting to update the attribute of the sub-resource <Context> of the notification resource "Rsc-CA_Annc", the request message (the same as the above-mentioned fourth request message for requesting to update the context information of the terminal stored by the GA) including a fourth context parameter, specifically:
1) Address: URI of the sub-resource <Context> of the notification resource "Rsc-CA_Annc".
2) Content: attribute of the sub-resource <Context> needing to be updated.

At S520, after receiving the request message of the CS, the GA updates the attribute value of the notification sub-resource <Context> of the notification resource "Rsc-CA_Annc" according to the fourth context parameter to the updated context information of the terminal.

At S522, the GA sends a notification sub-resource update response to the CS, the response message including the URI of the notification sub-resource <Context> of the notification resource "Rsc-CA_Annc".

At S524, after receiving the response message of the GA, the CS sends a sub-resource update response to the control App, the response message including the URI of the sub-resource <Context> of the original resource "Rsc-CA".

At S526, the MD enters a near-end network.

At S528, when the GA needs to obtain the context information of the MD, the attribute of the sub-resource <Context> of the notification resource "Rsc-CA_Annc" is retrieved locally.

It is to be noted that operations S506, S508 and S510 may also adopt operations S506a, S508a and S510a, and operations S506a, S508a and S510a will be respectively described below.

At S506a, the CS judges whether the "Notify to" attribute of the resource "Rsc-CA" has an identity of the GA in the notification parameter, if not, a notification resource create request is sent to the GA, for requesting to create a notification resource of the sub-resource <Context>, the request message (the same as the above-mentioned second request message for requesting the GA to create the context information of the terminal) including a context parameter.

At S508a, after receiving the request message of the CS, the GA creates a notification resource "Rsc-SC_Annc", and creates a notification sub-resource <Context> for the notification resource "Rsc-SC_Annc", the attribute value being the same as the sub-resource <Context> of the original resource "Rsc-CA".

At S510a, the GA sends a notification resource update response to the CS, the response message including the URI of the notification sub-resource <Context> of the notification resource "Rsc-SC_Annc".

Through the description of the above implementation manners, those skilled in the art can clearly understand that the method according to the above embodiment may be implemented by means of software plus a necessary general hardware platform, and of course, may also be implemented through hardware, but in many cases, the former is a better implementation manner. Based on such understanding, the technical solution of the embodiments of the disclosure, which is essential or contributes to the conventional art, may be embodied in the form of a software product stored in a storage medium (such as a ROM/RAM, a magnetic disk and an optical disc), including a number of instructions for causing a terminal device (which may be a mobile phone, a computer, a server, or a network device, etc.) to perform the methods described in various embodiments of the disclosure.

### Second Embodiment

In the present embodiment, an information synchronization device is also provided. The device is used to implement the above embodiments and preferred implementation manners, and those have not been described will not be elaborated. As used below, the term "module" may implement a combination of software and/or hardware of a predetermined function. Although the device described in the following embodiments is preferably implemented in software, hardware, or a combination of software and hardware, is also possible and contemplated.

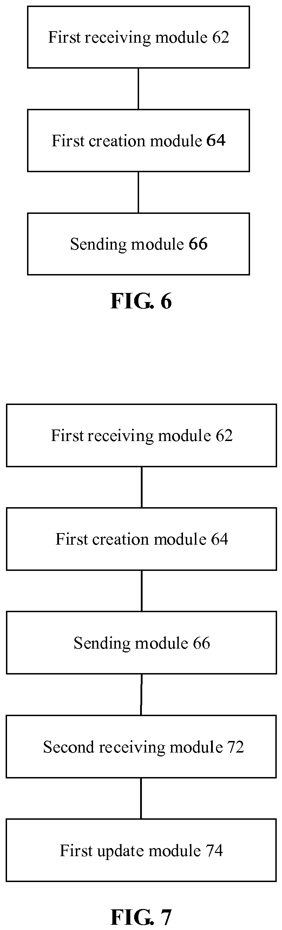

FIG. 6 is a structural block diagram 1 of an information synchronization device according to an embodiment of the disclosure. As shown in FIG. 6, the device includes a first receiving module 62, a first creation module 64 and a sending module 66.

The first receiving module 62 is configured to receive a first request message sent from a terminal and used for requesting to create context information of the terminal, herein the first request message includes a first context parameter for creating the context information of the terminal.

The first creation module 64 is configured to create the context information of the terminal according to the first context parameter.

The sending module 66 is connected to the first creation module 64, and is configured to send a second request message to a Gateway Agent (GA) corresponding to a GA identifier obtained from the first context parameter and used for identifying the GA that needs to create the context information of the terminal, herein the second request message is used for requesting the GA to create the context information of the terminal.

Optionally, the first creation module 64 is further configured to create a sub-resource in an original resource of the terminal according to the first context parameter, and set an attribute value of the sub-resource according to the first context parameter; and the sending module 66 is further configured to send a request message for creating a notification resource corresponding to the sub-resource to the GA corresponding to the GA identifier, where the request message for creating the notification resource corresponding to the sub-resource is used for requesting the GA to create the notification resource corresponding to the sub-resource, and an attribute value of the notification resource is set as the attribute value of the sub-resource according to the request message.

FIG. 7 is a preferred structural block diagram 1 of an information synchronization device according to an embodiment of the disclosure. As shown in FIG. 7, the device includes, in addition to all modules shown in FIG. 6, a second receiving module 72 and a first update module 74, which are described respectively below.

The second receiving module 72 is configured to receive a third request message sent from the terminal and used for requesting to update the context information of the terminal, herein the third request message includes a second context parameter for updating the context information of the terminal.

The first update module 74 is connected to the second receiving module 72, and is configured to update the locally-stored context information of the terminal according to the second context parameter, and send a fourth request message to the GA according to the second context parameter, herein the fourth request message is used for requesting to update the context information of the terminal, which is stored by the GA.

Optionally, the first update module 74 is further configured to update the attribute value of the sub-resource in the original resource of the terminal according to the second context parameter, and send a fifth request message to the GA according to the second context parameter, the fifth request message being used for requesting the GA to update the attribute value of the notification resource corresponding to the sub-resource.

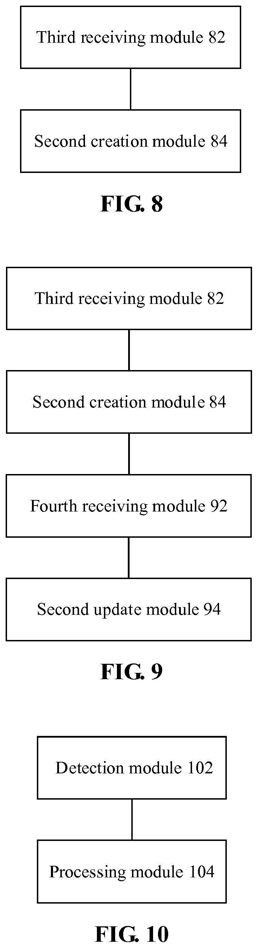

In the present embodiment, an information synchronization device is also provided. FIG. 8 is a structural block diagram 1 of an information synchronization device according to an embodiment of the disclosure. As shown in FIG. 8, the device includes a third receiving module 82 and a second creation module 84.

The third receiving module 82 is configured to receive a second request message sent from a CS and used for requesting to create context information of a terminal, herein the second request message includes a third context parameter.

The second creation module 84 is connected to the third receiving module 82, and is configured to create the context information of the terminal according to the third context parameter.

Optionally, the second creation module 84 is further configured to create a notification resource corresponding to a sub-resource in an original resource of the terminal according to the third context parameter, and set an attribute value of the notification resource as the context information of the terminal according to the third context parameter, where the context information of the terminal is an attribute value of the sub-resource in the original resource of the terminal in the CS.

FIG. 9 is a preferred structural block diagram 2 of an information synchronization device according to an embodiment of the disclosure. As shown in FIG. 9, the device includes a fourth receiving module 92 and a second update module 94.

The fourth receiving module 92 is configured to receive a fourth request message sent from the CS and used for requesting to update the context information of the terminal, herein the fourth request message includes a fourth context parameter.

The second update module 94 is connected to the fourth receiving module 92, and is configured to update the locally-stored context information of the terminal according to the fourth context parameter.

Optionally, the second update module 94 is further configured to update the attribute value of the notification resource corresponding to the sub-resource according to the fourth context parameter.

FIG. 10 is a preferred structural block diagram 3 of an information synchronization device according to an embodiment of the disclosure. As shown in FIG. 10, the device includes a detection module 102 and a processing module 104.

The detection module 102 is configured to detect access by the terminal.

The processing module 104 is connected to the detection module 102, and is configured to process the service of the terminal according to the locally-stored context information of the terminal.

Optionally, the processing module 104 is further configured to process the service of the terminal according to the attribute value of the notification resource corresponding to the sub-resource.

It is to be noted that each of the above modules may be implemented by software or hardware. For the latter, it may be implemented by, but not limited to, the following manners that the above modules are all located in the same processor; or, the above modules are located in different processors in any combination form respectively.

### Third Embodiment

The embodiment of the disclosure also provides a storage medium. Optionally, in the present embodiment, the storage medium may be configured to store a program code for performing the operations as follows.

At S1, a first request message sent from a terminal and used for requesting to create context information of the terminal is received, herein the first request message includes a first context parameter for creating the context information of the terminal.

At S2, the context information of the terminal is created according to the first context parameter.

At S3, a second request message is sent to a GA corresponding to a GA identifier obtained from the first context parameter and used for identifying the GA that needs to create the context information of the terminal, herein the second request message is used for requesting the GA to create the context information of the terminal.

Optionally, the storage medium is further configured to store a program code for performing the operations as follows. The operation that the context information of the terminal is created according to the first context parameter includes the operations as follows.

At S1, a sub-resource is created in an original resource of the terminal according to the first context parameter, and an attribute value of the sub-resource is set according to the first context parameter.

The operation that a second request message is sent to a GA corresponding to a GA identifier obtained from the first context parameter and used for identifying the GA that needs to create the context information of the terminal includes the operations as follows.

At S1, a request message for creating a notification resource corresponding to the sub-resource is sent to the GA corresponding to the GA identifier obtained from the first context parameter and used for identifying the GA that needs to create the context information of the terminal, where the request message for creating the notification resource corresponding to the sub-resource is used for requesting the GA to create the notification resource corresponding to the sub-resource, and an attribute value of the notification resource is set as the attribute value of the sub-resource according to the request message.

Optionally, the storage medium is further configured to store a program code for performing the operations as follows.

At S1, a third request message sent from the terminal and used for requesting to update the context information of the terminal is received, herein the third request message includes a second context parameter for updating the context information of the terminal.

At S2, the locally-stored context information of the terminal is updated according to the second context parameter, and a fourth request message is sent to the GA according to the second context parameter, herein the fourth request message is used for requesting to update the context information of the terminal, which is stored by the GA.

Optionally, the storage medium is further configured to store a program code for performing the operations as follows. The operation that the locally-stored context information of the terminal is updated according to the second context parameter and a fourth request message is sent to the GA according to the second context parameter includes the operations as follows.

At S1, the attribute value of the sub-resource in the original resource of the terminal is updated according to the second context parameter, and a fifth request message is sent to the GA according to the second context parameter, the fifth request message being used for requesting the GA to update the attribute value of the notification resource corresponding to the sub-resource.

The embodiment of the disclosure also provides a storage medium. Optionally, in the present embodiment, the storage medium may be configured to store a program code for performing the operations as follows.

At S1, a second request message sent from a CS and used for requesting to create context information of a terminal is received, herein the second request message includes a third context parameter.

At S2, the context information of the terminal is created according to the third context parameter.

Optionally, the storage medium is further configured to store a program code for performing the operations as follows. The operation that the context information of the terminal is created according to the third context parameter includes the operations as follows.

At S1, a notification resource corresponding to a sub-resource in an original resource of the terminal is created according to the third context parameter, and an attribute value of the notification resource is set as the context information of the terminal according to the third context parameter, where the context information of the terminal is an attribute value of the sub-resource in the original resource of the terminal in the CS.

Optionally, the storage medium is further configured to store a program code for performing the operations as follows.

At S1, a fourth request message sent from the CS and used for requesting to update the context information of the terminal is received, herein the fourth request message includes a fourth context parameter.

At S2, the locally-stored context information of the terminal is updated according to the fourth context parameter.

Optionally, the storage medium is further configured to store a program code for performing the operations as follows. The operation that the locally-stored context information of the terminal is updated according to the fourth context parameter includes the operations as follows.

At S1, the attribute value of the notification resource corresponding to the sub-resource is updated according to the fourth context parameter.

Optionally, the storage medium is further configured to store a program code for performing the operations as follows.

At S1, access by the terminal is detected.

At S2, the service of the terminal is processed according to the locally-stored context information of the terminal.

Optionally, the storage medium may be further configured to store a program code for performing the operations as follows. The operation that the service of the terminal is processed according to the locally-stored context information of the terminal includes the operations as follows.

At S1, the service of the terminal is processed according to the attribute value of the notification resource corresponding to the sub-resource.

Optionally, in the present embodiment, the storage medium may include, but is not limited to, various media capable of storing a program code such as a U disk, a Read-Only Memory (ROM), a Random Access Memory (RAM), a mobile hard disk, a magnetic disk or an optical disc.

Optionally, in the present embodiment, the processor performs, according to the program code stored in the storage medium, the operations as follows. A first request message sent from a terminal and used for requesting to create context information of the terminal is received, herein the first request message includes a first context parameter for creating the context information of the terminal; the context information of the terminal is created according to the first context parameter; and a second request message is sent to a GA corresponding to a GA identifier obtained from the first context parameter and used for identifying the GA that needs to create the context information of the terminal, herein the second request message is used for requesting the GA to create the context information of the terminal.

Optionally, in the present embodiment, the processor performs, according to the program code stored in the storage medium, the operations as follows. The operation that the context information of the terminal is created according to the first context parameter includes that: a sub-resource is created in an original resource of the terminal according to the first context parameter, and an attribute value of the sub-resource is set according to the first context parameter. The operation that a second request message is sent to a GA corresponding to a GA identifier obtained from the first context parameter and used for identifying the GA that needs to create the context information of the terminal includes that: a request message for creating a notification resource corresponding to the sub-resource is sent to the GA corresponding to the GA identifier, where the request message for creating the notification resource corresponding to the sub-resource is used for requesting the GA to create the notification resource corresponding to the sub-resource, and an attribute value of the notification resource is set as the attribute value of the sub-resource according to the request message.

Optionally, in the present embodiment, the processor performs, according to the program code stored in the storage medium, the operations as follows. A third request message sent from the terminal and used for requesting to update the context information of the terminal is received, herein the third request message includes a second context parameter for updating the context information of the terminal; and the locally-stored context information of the terminal is updated according to the second context parameter, and a fourth request message is sent to the GA according to the second context parameter, herein the fourth request message is used for requesting to update the context information of the terminal, which is stored by the GA.

Optionally, in the present embodiment, the processor performs, according to the program code stored in the storage medium, the operations as follows. The operation that the locally-stored context information of the terminal is updated according to the second context parameter and a fourth request message is sent to the GA according to the second context parameter includes that: the attribute value of the sub-resource in the original resource of the terminal is updated according to the second context parameter, and a fifth request message is sent to the GA according to the second context parameter, the fifth request message being used for requesting the GA to update the attribute value of the notification resource corresponding to the sub-resource.

Optionally, in the present embodiment, the processor performs, according to the program code stored in the storage medium, the operations as follows. A second request message sent from the CS and used for requesting to create the context information of the terminal is received, herein the second request message includes a third context parameter; and the context information of the terminal is created according to the third context parameter.

Optionally, in the present embodiment, the processor performs, according to the program code stored in the storage medium, the operations as follows. The operation that the context information of the terminal is created according to the third context parameter includes that: a notification resource corresponding to a sub-resource in an original resource of the terminal is created according to the third context parameter, and an attribute value of the notification resource is set as the context information of the terminal according to the third context parameter, where the context information of the terminal is an attribute value of the sub-resource in the original resource of the terminal in the CS.

Optionally, in the present embodiment, the processor performs, according to the program code stored in the storage medium, the operations as follows. A fourth request message sent from the CS and used for requesting to update the context information of the terminal is received, herein the fourth request message includes a fourth context parameter; and the locally-stored context information of the terminal is updated according to the fourth context parameter.

Optionally, in the present embodiment, the processor performs, according to the program code stored in the storage medium, the operations as follows. The operation that the locally-stored context information of the terminal is updated according to the fourth context parameter includes that: the attribute value of the notification resource corresponding to the sub-resource is updated according to the fourth context parameter.

Optionally, in the present embodiment, the processor performs, according to the program code stored in the storage medium, the operations as follows. Access by the terminal is detected; and the service of the terminal is processed according to the locally-stored context information of the terminal.

Optionally, in the present embodiment, the processor performs, according to the program code stored in the storage medium, the operations as follows. The operation that the service of the terminal is processed according to the locally-stored context information of the terminal includes that: the service of the terminal is processed according to the attribute value of the notification resource corresponding to the sub-resource.

Optionally, a specific example in the present embodiment may refer to the examples described in the above embodiments and alternative implementation manners, and details are not described herein in the present embodiment.

It is apparent that a person skilled in the art shall understand that all of the above-mentioned modules or operations in the embodiments of the disclosure may be implemented by using a general calculation device, may be centralized on a single calculation device or may be distributed on a network composed of multiple calculation devices. Optionally, they may be implemented by using executable program codes of the calculation devices. Thus, they may be stored in a storage device and executed by the calculation devices, the shown or described operations may be executed in a sequence different from this sequence under certain conditions, or they are manufactured into each integrated circuit module respectively, or multiple modules or operations therein are manufactured into a single integrated circuit module. Thus, the disclosure is not limited to the combination of any specific hardware and software.

The above is only the preferred embodiments of the disclosure, not intended to limit the disclosure. As will occur to those skilled in the art, the disclosure is susceptible to various modifications and changes. Any modifications, equivalent replacements, improvements and the like made within the spirit and principle of the disclosure shall fall within the scope of protection of the disclosure.

### INDUSTRIAL APPLICABILITY

As mentioned above, by means of the above embodiments and preferred implementations, after context information of a terminal is created, the context information of the terminal is synchronized to a GA, so that the GA is not required to obtain the context information of the terminal from a CS or the terminal through an intermediate network element. Therefore, the problem in the related art of a great amount of signaling overheads during the process of obtaining context information of a terminal by a GA can be solved, thereby achieving the effect of reducing signaling overheads.

## Claims

1. An information synchronization method, comprising:
receiving a first request message sent from a terminal and used for requesting to create context information of the terminal, wherein the first request message comprises a first context parameter for creating the context information of the terminal;
creating the context information of the terminal according to the first context parameter; and
sending a second request message to a Gateway Agent, GA, corresponding to a GA identifier obtained from the first context parameter and used for identifying the GA that needs to create the context information of the terminal, wherein the second request message is used for requesting the GA to create the context information of the terminal.

2. The method according to claim 1, wherein
creating the context information of the terminal according to the first context parameter comprises: creating a sub-resource in an original resource of the terminal according to the first context parameter, and setting an attribute value of the sub-resource according to the first context parameter; and
sending the second request message to the GA corresponding to the GA identifier obtained from the first context parameter and used for identifying the GA that needs to create the context information of the terminal comprises: sending a request message for creating a notification resource corresponding to the sub-resource to the GA corresponding to the GA identifier, wherein the request message for creating the notification resource corresponding to the sub-resource is used for requesting the GA to create the notification resource corresponding to the sub-resource, and an attribute value of the notification resource is set as the attribute value of the sub-resource according to the request message.

3. The method according to claim 2, further comprising:
receiving a third request message sent from the terminal and used for requesting to update the context information of the terminal, wherein the third request message comprises a second context parameter for updating the context information of the terminal; and
updating locally-stored context information of the terminal according to the second context parameter, and sending a fourth request message to the GA according to the second context parameter, wherein the fourth request message is used for requesting to update the context information of the terminal, which is stored by the GA.

4. The method according to claim 3, wherein the operation of updating the locally-stored context information of the terminal according to the second context parameter and sending a fourth request message to the GA according to the second context parameter comprises:
updating the attribute value of the sub-resource in the original resource of the terminal according to the second context parameter, and sending a fifth request message to the GA according to the second context parameter, the fifth request message being used for requesting the GA to update the attribute value of the notification resource corresponding to the sub-resource.

5. An information synchronization method, comprising:
receiving a second request message sent from a Cloud Service, CS, and used for requesting to create context information of a terminal, wherein the second request message comprises a third context parameter; and
creating the context information of the terminal according to the third context parameter.

6. The method according to claim 5, wherein creating the context information of the terminal according to the third context parameter comprises:
creating a notification resource corresponding to a sub-resource in an original resource of the terminal according to the third context parameter, and setting an attribute value of the notification resource as the context information of the terminal according to the third context parameter, wherein the context information of the terminal is an attribute value of the sub-resource in the original resource of the terminal in the CS.

7. The method according to claim 6, further comprising:
receiving a fourth request message sent from the CS and used for requesting to update the context information of the terminal, wherein the fourth request message comprises a fourth context parameter; and
updating locally-stored context information of the terminal according to the fourth context parameter.

8. The method according to claim 7, wherein updating the locally-stored context information of the terminal according to the fourth context parameter comprises:
updating the attribute value of the notification resource corresponding to the sub-resource according to the fourth context parameter.

9. The method according to claim 5 or 8, further comprising:
detecting access by the terminal; and
processing a service of the terminal according to the locally-stored context information of the terminal.

10. The method according to claim 9, wherein processing the service of the terminal according to the locally-stored context information of the terminal comprises:
processing the service of the terminal according to the attribute value of the notification resource corresponding to the sub-resource.

11. An information synchronization device, comprising:
a first receiving module, configured to receive a first request message sent from a terminal and used for requesting to create context information of the terminal, wherein the first request message comprises a first context parameter for creating the context information of the terminal;
a first creation module, configured to create the context information of the terminal according to the first context parameter; and
a sending module, configured to send a second request message to a Gateway Agent, GA, corresponding to a GA identifier obtained from the first context parameter and used for identifying the GA that needs to create the context information of the terminal, wherein the second request message is used for requesting the GA to create the context information of the terminal.

12. The device according to claim 11, wherein
the first creation module is further configured to create a sub-resource in an original resource of the terminal according to the first context parameter, and set an attribute value of the sub-resource according to the first context parameter; and
the sending module is further configured to send a request message for creating a notification resource corresponding to the sub-resource to the GA corresponding to the GA identifier, wherein the request message for creating the notification resource corresponding to the sub-resource is used for requesting the GA to create the notification resource corresponding to the sub-resource, and an attribute value of the notification resource is set as the attribute value of the sub-resource according to the request message.

13. The device according to claim 12, further comprising:
a second receiving module, configured to receive a third request message sent from the terminal and used for requesting to update the context information of the terminal, wherein the third request message comprises a second context parameter for updating the context information of the terminal; and
a first update module, configured to update locally-stored context information of the terminal according to the second context parameter, and send a fourth request message to the GA according to the second context parameter, wherein the fourth request message is used for requesting to update the context information of the terminal, which is stored by the GA.

14. The device according to claim 13, wherein the first update module is further configured to update the attribute value of the sub-resource in the original resource of the terminal according to the second context parameter, and send a fifth request message to the GA according to the second context parameter, the fifth request message being used for requesting the GA to update the attribute value of the notification resource corresponding to the sub-resource.

15. An information synchronization device, comprising:
a third receiving module, configured to receive a second request message sent from a Cloud Service, CS, and used for requesting to create context information of a terminal, wherein the second request message comprises a third context parameter; and
a second creation module, configured to create the context information of the terminal according to the third context parameter.

16. The device according to claim 15, wherein the second creation module is further configured to create a notification resource corresponding to a sub-resource in an original resource of the terminal according to the third context parameter, and set an attribute value of the notification resource as the context information of the terminal according to the third context parameter, wherein the context information of the terminal is an attribute value of the sub-resource in the original resource of the terminal in the CS.

17. The device according to claim 16, further comprising:
a fourth receiving module, configured to receive a fourth request message sent from the CS and used for requesting to update the context information of the terminal, wherein the fourth request message comprises a fourth context parameter; and
a second update module, configured to update locally-stored context information of the terminal according to the fourth context parameter.

18. The device according to claim 17, wherein the second update module is further configured to update the attribute value of the notification resource corresponding to the sub-resource according to the fourth context parameter.

19. The device according to any one of claims 11 to 18, further comprising:
a detection module, configured to detect access by the terminal; and
a processing module, configured to process a service of the terminal according to the locally-stored context information of the terminal.

20. The device according to claim 19, wherein the processing module is further configured to process the service of the terminal according to the attribute value of the notification resource corresponding to the sub-resource.
